# EUROPÄISCHE PATENTSCHRIFT

(11) **EP 3 146 881 B1**
(45) Veröffentlichungstag und Bekanntmachung des Hinweises auf die Patenterteilung: **02.10.2019**
(21) Anmeldenummer: 16002310.7
(22) Anmeldetag: 23.08.2011
(51) Int. Cl.: A47L 9/20, B01D 46/00, A47L 9/22, A47L 5/22

(54) **FILTERABREINIGUNG FÜR SCHMUTZSAUGER**
FILTER CLEANING FOR DIRT SUCTION DEVICE
NETTOYAGE DE FILTRE POUR ASPIRATEUR

(30) Priorität: 18.09.2010 DE 102010045979
(43) Veröffentlichungstag der Anmeldung: 29.03.2017
(62) Teilanmeldung aus: 11764085.4
(73) Patentinhaber: Nilfisk A/S, 2605 Brøndby (DK)
(72) Erfinder: BONDIOLI, Cesare, 41059 Zocca (MO) (IT); AMISANI, Gianni, 40034 Castel d'Aiano (BO) (IT); DE FALCO, Mauro, 41058 Vignola (MO) (IT)
(74) Vertreter: Riebling, Peter

(56) Entgegenhaltungen:
- EP-A1- 0 955 003
- EP-A1- 1 997 415
- DE-A1- 10 101 219

## Beschreibung

Gegenstand der Erfindung ist ein Schmutzsauger nach dem Oberbegriff des Patentanspruches 1.

Eine Filterabreinigung für einen Schmutzsauger mit einer Ventilsteuerung zur Abreinigung mindestens eines Filters ist mit der auf den gleichen Anmelder zurückgehenden deutschen Patentschrift DE 101 01 219 B4 bekannt geworden.. Dort wo gleiche Teile vorhanden sind, wurden in der vorliegenden Beschreibung auch gleiche Bezugszeichen wie in der DE 101 01 219 B4 verwendet, so dass im Hinblick auf die Funktion und den Steuerungsablauf der vorliegenden Erfindung auf den Offenbarungsinhalt der DE 1010 01 219 B4 verwiesen werden kann.

Bei der genannten Patentschrift ist ein einziger Ringfilter vorhanden, welcher durch einen Trennsteg in zwei unterschiedliche Filterhälften unterteilt ist. Die genannte Druckschrift lässt jedoch auch die Anordnung von mehr als einen Ringfilter mit dazugehörenden Trennstegen zu, so dass zwei oder mehrere Filter bereits schon aus dieser Druckschrift zu entnehmen sind.

Bei der genannten Druckschrift ist das Gebläse im Gehäuse des Schmutzsaugers angeordnet, was jedoch mit dem Nachteil verbunden ist, dass die Gebläseleistung stark begrenzt ist. Aus diesem Grund ist es mit der DE 101 01 219 B4 nicht möglich, Schmutzsauger mit wesentlich größeren Saugleistungen auszurüsten, weil - platzbegrenzend - das Gebläse im Schmutzsauger selbst angeordnet ist, und dies begrenzt die Saugleistung.

Weiterer Nachteil des in dieser Patentschrift zugrunde liegenden Schmutzsaugers ist, dass ein Betrieb eines Schmutzsaugers getrennt von seinem Gebläse nicht möglich ist. Es führte zu dem Nachteil, dass einerseits - wie oben ausgeführt - keine hohen Saugleistungen wegen des überdimensionierten Gebläses möglich sind und zum Zweiten mit dem Nachteil verbunden ist, dass ein solcher Schmutzsauger nicht als Vorabscheider in stationären Gebläseanlagen verwendet werden kann.

Ein weiterer Nachteil besteht darin, dass eine unerwünscht hohe Geräuschentwicklung gegeben ist, weil das mit einem hochtourig laufenden Motor ausgerüstete Gebläse im Schmutzsaugergehäuse selbst angeordnet ist und hierdurch eine beträchtliche Schallentwicklung entsteht.

Weil bei der bekannten Patentschrift DE 101 01 219 B4 das Gebläse mit in den Schmutzsauger integriert ist, sind dort nur sogenannte Ringfilter möglich und nicht einzelne Filterpatronen, die separat für sich in dem Schmutzsaugergehäuse angeordnet sind.

Deshalb hat das bekannte System den folgenden Nachteil, dass im Prinzip nur ein einziger Ringfilter, der durch einen Trennsteg in zwei Filterhälften abgeteilt ist, verwendet werden kann und nicht eine Mehrzahl von unterschiedlichen Filtern, die mit der bekannten Abreinigungssteuerung jeweils separat für sich abzureinigen sind.

Der Erfindung liegt die Aufgabe zugrunde, einen Schmutzsauger der eingangs genannten Art und insbesondere dessen Abreinigungssteuerung einfacher und zuverlässiger zu gestalten.

Zur Lösung der gestellten Aufgabe ist die Erfindung durch einen Schmutzsauger mit den Merkmalen des Anspruch 1 gekennzeichnet.

Im Schmutzsauger selbst ist es nun möglich, auf die relativ groß bauenden Ringfilter zu verzichten und stattdessen sogenannte Filterpatronen zu verwenden, die in einer Mehrzahl von mehr als zwei getrennt ansteuerbare Filterpatronen im Schmutzsaugergehäuse angeordnet sind.

So können beispielsweise 2, 3 oder eine Vielzahl von getrennt ansteuerbare Filterpatronen in dem Schmutzsaugergehäuse angeordnet werden, wobei die erfindungsgemäße Abreinigungssteuerung so angesteuert wird, dass jeweils ein oder mehrere Filterpatronen in der Abreinigungsstellung sind, während die anderen Filterpatronen in der Saug- (Arbeits-)-Stellung sind.

Dies ist ein wesentlicher Vorteil gegenüber dem Stand der Technik nach der DE 101 01 219 B4, weil dort stets nur ein einziger Ringfilter vorhanden ist, dessen Standzeit naturgemäß begrenzt ist und es wesentlich günstiger ist anstatt eines einzigen Ringfilters eine Vielzahl von Filterpatronen jeweils in eine Saug- oder Abreinigungsstellung zu bringen.

Deshalb wird die Lebensdauer eines solchen Schmutzsaugers mit einer beliebigen Anzahl von mehr als zwei darauf angeordneten Filterpatronen wesentlich verlängert, weil die Filterpatronen alle getrennt für sich abgereinigt werden können und auch entsprechend dem Verschleiß getrennt ausgewechselt werden können. Die Anmeldung soll jedoch nicht auf Filterpatronen beschränkt sein, ebenso sind z.B. Flachfilter möglich.

Die neuartige Ventilsteuerungunterscheidet sich um erfinderische Merkmale von dem Patent DE 101 01 219 B4.

Vorteil der "alten" Ventilsteuerung war eine sogenannte Folgesteuerung, wie sie in der DE 101 01 219 B4 offenbart ist.
Unter einer Folgesteuerung wird verstanden, dass beim Abreinigen zuerst die Ansaugöffnung des abzureinigenden Filters verschlossen wird, und erst danach - wenn diese Ansaugöffnung des einen Filters durch ein Ventil verschlossen ist - das andere, der Spülung dienende Ventil geöffnet wird. So wurde stets sichergestellt, dass erst wenn das eine Ventil geschlossen ist, das andere Ventil geöffnet wurde.

Im Rahmen der vorliegenden Erfindung wird beansprucht, dass die Ventilsteuerung für das eine Ventil vereinfacht wird und unabhängig von der Steuerung des anderen Ventils beansprucht wird.

Während bei dem Stand der Technik die Ventilteller gleitend mit der Ventilstange des Hubmagneten verbunden waren, sieht die neuartige Ventilsteuerung vor, dass der Ventilteller fest mit der jeweiligen Ventilstange des Hubmagneten verbunden ist und mittels einer Schraubendruckfeder in ihrer Schließstellung federbelastet gehalten wird. Dies ist ein Unterschied gegenüber dem Stand der Technik, bei welchem die Druckfeder nur dafür da ist, eine Verschiebung überhaupt zu erlauben, wobei die Schließstellung durch Unterdruckeinwirkung auf den Ventilteller eintritt.

Bei der vorliegenden Erfindung wird eine Ventilsteuerung beansprucht, bei der die Schraubendruckfeder zur Herstellung der Schließstellung erforderlich ist und somit der Ventilteller federbelastet in der Schließstellung gehalten wird. Um diesen in die Offenstellung zu bringen, muss deshalb die Feder durch den Hubmagneten entsprechend zusammengedrückt werden.

Der Vorteil der erfindungsgemäßen Ventilkonstruktion ist die Einfachheit der Konstruktion, weil Schiebesitze an den Ventilstangen nicht mehr erforderlich sind und nur noch fest mit der Ventilstange verwendete Ventilteller in Einsatz kommen. Als Folge dieser Maßnahme ist es erforderlich, die Saug- und Druckseite der gesamten Ventilsteuerung umzukehren, wie dann später anhand der weiteren Figuren in der Zeichnung erläutert wird.

Im Folgenden wird die Erfindung anhand der Zeichnungen näher erläutert. Hierbei gehen aus den Zeichnungen und ihrer Beschreibung weitere Merkmale und Vorteile der Erfindung hervor.

Es zeigen:
- Figur 1:: Schnitt durch einen Schmutzsauger mit zwei Filtern, wobei beide Filter in der Arbeitsstellung sind. Diese Ausführungsform entspricht nicht dem Gegenstand der Erfindung und dient zur allgemeinen Beschreibung eines Schmutzsaugers mit Filterabreinigung.
- Figur 2:: gleicher Schnitt wie Figur 1, wobei das rechte Filter abgereinigt wird. Diese Ausführungsform entspricht nicht dem Gegenstand der Erfindung und dient zur allgemeinen Beschreibung eines Schmutzsaugers mit Filterabreinigung.
- Figur 3:: eine Ausführung eines Schmutzsaugers mit einer erfindungsgemäßen Ventilsteuerung, bei der die Ventilteller fest mit der jeweiligen Ventilstange verbunden sind, wobei die beiden Filter in der Arbeitsstellung sind
- Figur 4:: die gleiche Darstellung wie Figur 3 mit der Abreinigungsstellung des rechten Filters
- Figur 5:: schematisiert die Darstellung der getrennten Anordnung eines Schmutzsaugers von einem Gebläse
- Figur 6:: die Draufsicht auf eine gegenüber der Figur 5 abgewandelte Ausführungsform, bei der ein Schmutzsauger mit zwei Gebläsen betrieben im Parallelbetrieb betrieben wird
- Figur 7:: Schnitt durch einen Schmutzsauger mit zwei Filtern, wobei beide Filter als Flachfilter ausgebildet und in der Arbeitsstellung sind. Diese Ausführungsform entspricht nicht dem Gegenstand der Erfindung und dient zur allgemeinen Beschreibung eines Schmutzsaugers mit Filterabreinigung.

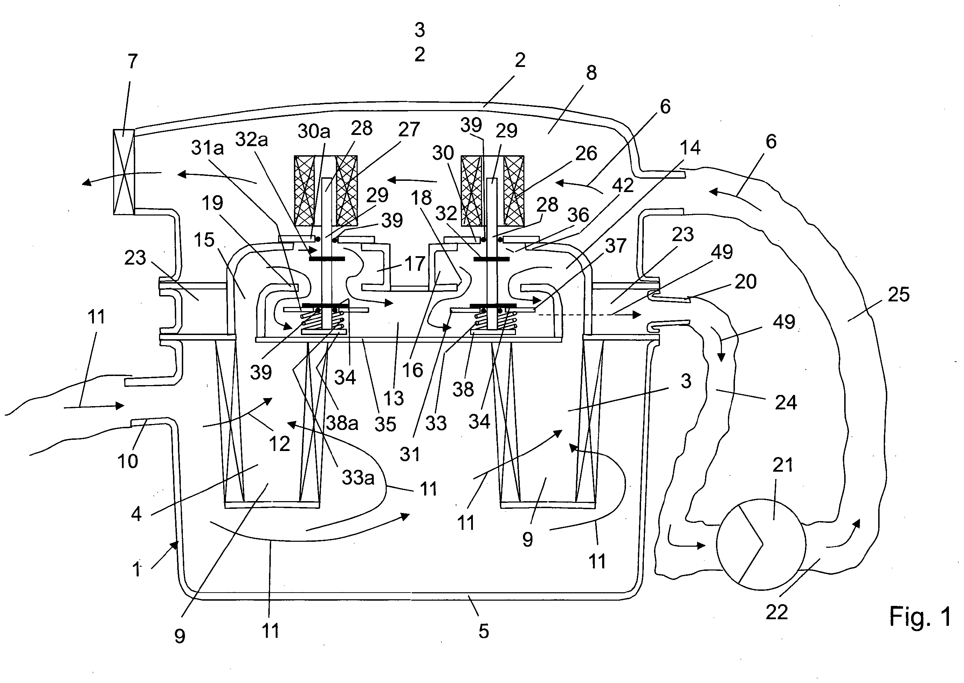

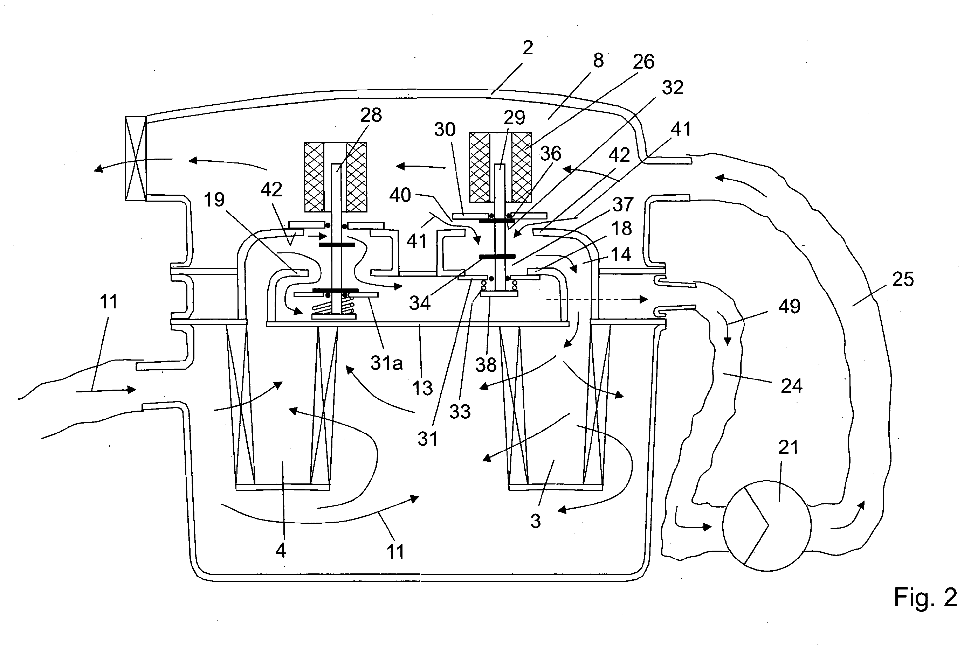

In Figur 1 ist allgemein ein Schmutzsaugergehäuse 1, welches einen Behälterboden 5 aufweist und nach oben durch einen Gehäusedeckel 2 abgeschlossen ist. Die Ausführungsform gemäß den Figuren 1 und 2 entspricht nicht dem Gegenstand der Erfindung und dient zur allgemeinen Beschreibung eines Schmutzsaugers mit Filterabreinigung.
In dem Schmutzsaugergehäuse 1 sind zwei als Filterpatronen ausgebildete getrennte Filter 3, 4 angeordnet. Diese Filter 3, 4 können als Filterpatronen oder auch als getrennte Ringfilter ausgebildet sein.

Über einen Sauganschluss 10 wird die mit Schmutz beladene Saugluft in Pfeilrichtung 11 in den Innenraum des Schmutzsaugergehäuses 1 hineingesaugt und strömt in Pfeilrichtung 11 gegen die Außenseite der Filter 3, 4. Die Saugluft kann im Folgenden ebenso auch als Rohluft bezeichnet werden.

In dem Schmutzsaugergehäuse 1 ist ein Boden 35 angeordnet, der auch ein Teil der in Figur 1 beschriebenen Ventilsteuerung darstellt.

Der Boden 35 ist Teil einer Saugkammer 13, in dem die einander zugeordneten und parallel zueinander betriebenen Ventile angeordnet sind.

Nachdem die Filter 3, 4 und deren Ventilsteuerung genau gleich ausgebildet sind, reicht es an und für sich aus, lediglich die eine Seite der Figuren 1 und 2 zu beschreiben, weil die gegenüberliegende, spiegelsymmetrische Seite genau gleich ausgebildet ist.

Für die gleichen Teile wurden auch die gleichen Bezugszeichen verwendet, wobei teilweise bei Bezugnahme auf das linke oder rechte Filter der Buchstabe a noch zusätzlich verwendet wurde.

In Figur 1 ist die Arbeitsstellung erkennbar, die zeigt, dass durch den jeweiligen Filter 3, 4 die Saugluft in Pfeilrichtung 12 hindurchgesaugt wird und entsprechend abgereinigt wird. Diese Luft gelangt in einen Einlasskanal 14, 15, wobei noch angefügt wird, dass der Innenraum des jeweiligen Filters 3, 4 als Filterkammer 9 bezeichnet wird, die jeweils luftschlüssig mit den Einlasskanälen 14, 15 verbunden ist.

Die Luft strömt somit in der angezeichneten Pfeilrichtung über die in Offenstellung gehaltenen Ventile in die Saugkammer 13 hinein, wobei die Saugkammer 13 luftschlüssig mit einer ringsumlaufenden Ringkammer 23 verbunden ist, in welche die Luft hineinströmt, dort gesammelt wird und in Pfeilrichtung 49 die Einlassöffnung 20 verlässt.

Die dort abgesaugte Reinluft wird über einen Schlauch 24 der Saugseite eines Gebläses 21 zugeführt, welches die Luft verdichtet und als Druckluft über den Auslass 22 in den Schlauch 25 einbläst, wo die Luft unter Überdruck in Pfeilrichtung 6 in den Überdruckraum 8 im Bereich des Gehäusedeckels 2 hineinströmt.

Dort wird die Luft gesammelt und verlässt in der eingezeichneten Pfeilrichtung den Ausblasfilter 7 und strömt in die Atmosphäre ab.

Wichtig ist nun, dass die Ventilsteuerung so ausgebildet ist, dass am Ventilsitz 18, 19 zunächst der Ventilteller 31, 31a vom Ventilsitz abgehoben ist, wobei die dazugehörende Feder 33, 33a zusammengedrückt ist. Dies wird dadurch erreicht, dass die beiden Hubmagnete 26, 27 stromlos sind und die dazugehörenden, von den Hubmagneten 26, 27 angesteuerten Ventilstangen 28, 29 allein durch das Eigengewicht der Ventilstange 28, 29 und die Druckunterschiede zwischen der Zwischenkammer 16, 17 und der Saugkammer 13 in Offenstellung gehalten werden, wobei die Feder 33, 33a noch nicht gespannt ist. Es ist ein auf der jeweiligen Ventilstange 28, 29 mit Hilfe von Dichtungen 39 verschiebbarer Ventilteller 31, 31a vorhanden, der in der in Figur 1 dargestellten Stellung von dem Ventilsitz 18, 19 abgehoben ist.

Gleichzeitig ist in der in Figur 1 eingezeichneten Stellung der obere Ventilteller 30, 30a, der ebenfalls über eine Dichtung 39 gleitend auf der Ventilstange 28, 29 aufsitzt und dort verschiebbar ist, in Schließstellung, weil er auf dem Ventilsitz 42 abdichtend aufsitzt.

Diese Schließstellung erfolgt allein durch den Druckunterschied zwischen dem Überdruckraum 8 und der Saugkammer 13, so dass also die genannten Ventilteller 30, 30a, 31, 31a selbsttätig durch den angelegten Unterdruck in der Arbeitsstellung gehalten werden.

Die fest mit der jeweiligen Ventilstange 28, 29 verbundenen Mitnehmerscheiben 32, 32a haben in der in Figur 1 dargestellten Stellung noch keine Funktion.

Kommt es jedoch zu einer Abreinigung des rechten Filters nach Figur 2, während der linke Filter 4 in seiner Arbeitsstellung bleibt, geschieht Folgendes:
Durch die Betätigung des Hubmagneten 26 wird die Ventilstange 29 angehoben, und die untere Anschlagscheibe 38 komprimiert die Feder 33, wodurch der Ventilteller 31 an den Ventilsitz 18 angepresst wird.

Damit wird der Einlasskanal 14 verschlossen, dadurch steigt der Unterdruck im Einlasskanal 14, die Ventilstange 29 fährt weiter in vertikaler Richtung nach oben, komprimiert die Feder 33, und die Mitnehmerscheibe 32 nimmt den Ventilteller 30 auf seinen Gleitsitz nach oben auf der Ventilstange 29 mit, und somit wird der Ventilsitz 42 geöffnet und Spülluft strömt in Pfeilrichtung 41 in den Einlasskanal 14 und strömt dort direkt in den Innenraum (Filterkammer 9) des Filters 3 hinein, wo es unter Überdruck den Filter durchströmt und die an der Außenseite des Filters 3 anhaftenden Schmutzpartikel absprengt und in den Innenraum des Schmutzsaugergehäuses 1 zur Ablage am Behälterboden 5 bringt.

Hierbei ist der linke Filter 4 nach wie vor in der Arbeitsstellung, d. h. die Luftführung entspricht genau der wie in Figur 1 dargestellt. Dies bedeutet, dass die Spülluft in Pfeilrichtung 41 ebenso abgeführt wird und von dem Filter 4 angesaugt wird und über den offenen Ventilteller 31a in die Saugkammer 13 gelangt, von dort aus in die Ringkammer 23 hineinläuft und in Pfeilrichtung 49 in den Ansaugschlauch 24 gelangt, wo sie von dem Gebläse 21 angesaugt und verdichtet wird.

In der Arbeitsstellung nach Figur 1 ist erkennbar, dass ein Abstand 37 zwischen der Anschlagscheibe 34 und dem Ventilteller 31 auf 0 gestellt ist, während in der gleichen Situation nach Figur 1 ein Abstand 36 zwischen der Mitnehmerscheibe 32 und dem Ventilsitz 42 vorhanden ist.

In der Abreinigungsstellung nach Figur 2 ist hierbei erkennbar, dass nunmehr der Abstand 37 eine bestimmte Größe hat und umgekehrt der Abstand 36 auf 0 gestellt ist.

Beim Umstellen der dargestellten Ventilteller 30, 31 gelangt somit die Spülluft bzw. Reinluft schlagartig in die Spülöffnung 40 und durchströmt in Pfeilrichtung 41 den Filter 3.

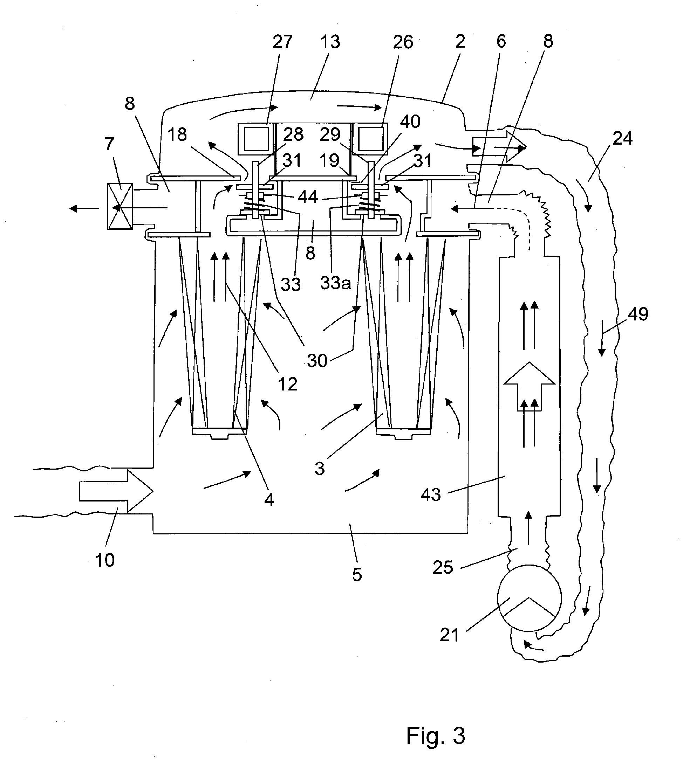

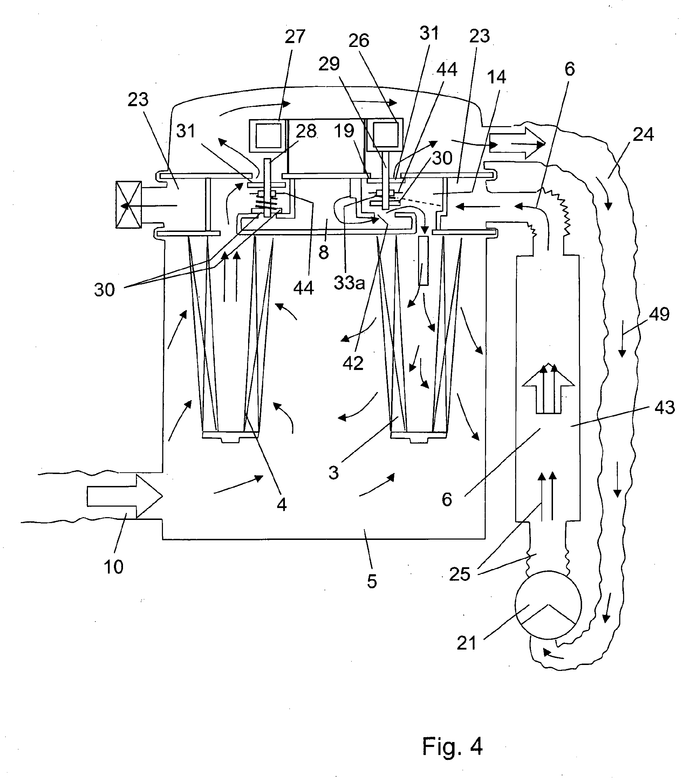

In den Figuren 3 und 4 wird ein erfindungsgemäßes Ausführungsbeispiel dargestellt, wobei es auch möglich ist, die Saug- und Druckseite der Anschlüsse des Gebläses 21 in das Schmutzsaugergehäuse 1 der Figuren 1 und 2 umzutauschen, weil eine andere Ventilsteuerung vorhanden ist.

Die in den Figuren 3 und 4 gezeigten Ventile umfassen mit jeweils der Ventilstange 28, 29 fest verbundene Ventilteller 30, 31, während beim Stand der Technik diese Ventilteller gleitend auf der Ventilstange ausgebildet waren.

Der Vorteil dieser Maßnahme ist, dass auf Gleitdichtungen und Verschiebeführungen verzichtet werden kann, wie dies sich aus den Figuren 3 und 4 ergibt. Konsequenz hierfür ist, dass nun die von dem Gebläse 21 verdichtete Druckluft über dem Schlauch 25 über zunächst einen Schalldämpfer 43 in das Gehäuse eingeführt wird, wobei die Druckkammer 8 nun eine andere Formgebung hat als vergleichsweise in den Figuren 1, 2.

Ansonsten gelten für die gleichen Teile die gleichen Bezugszeichen, wo aus Figuren 3 und 4 erkennbar ist, dass nun die Luft, die in Pfeilrichtung 6 in die Druckkammer 8 strömt, als Ausblasluft über den Überdruckraum 8 und das Ausblasfilter 7 in die Atmosphäre gelangt.

Die von dem Gebläse 21 erzeugte Saugluft wird wieder über den Sauganschluss 10 in den Innenraum des Schmutzsaugergehäuses 1 eingesaugt und beaufschlagt die Filter 3, 4 von ihrer Außenseite her.

Im Unterschied zu der Darstellung in den Figuren 1 und 2 sind jedoch die Saug- und Druckanschlüsse des Gebläses 21 gegeneinander ausgetauscht, weil die Saugluft, die in Pfeilrichtung 12 durch den Innenraum der Filter 3, 4 strömt, durch die nunmehr in Figur 3 vom Ventilsitz 18 abgehobenen Ventilteller 31 in die obere Saugkammer 13 strömt und in Pfeilrichtung 49 von dem Schlauch 24 angesaugt und der Saugseite des Gebläses 21 zugeführt wird.

In der gezeichneten Stellung nach Figur 3 ist der untere Ventilteller 30 in Schließstellung und wird in Schließstellung von der Feder 33 gehalten, die an einem gehäusefesten Anschlag 44 anliegt und sich dort abstützt.

Dies ist notwendig, weil im Druckraum 8 Überdruck vorhanden ist und die Feder die Öffnungsstellung in Figur 3 herbeiführen muss.

Die Hubmagnete 26, 27 sind in der in Figur 3 gezeigten Stellung nicht angesteuert und beaufschlagt.

Sollen hingegen z. B. das rechte Filter 3 nach Figur 4 abgereinigt werden, wird der Hubmagnet 26 beaufschlagt, und die Ventilstange 29 wird angehoben, wodurch der untere Ventilteller 30 von dem unteren Ventilsitz 42 abhebt. Dadurch kann Spülluft aus dem Überdruckraum 8 in den nunmehr offenen Einlasskanal 14 strömen und in die Filterkammer 9 des Filters 3 einströmen.

Hierbei wird vorausgesetzt, dass der Ventilteller 31 an den oberen Ventilsitz 19 anliegt und diese Öffnung verschließt.

In dem Augenblick, wo der untere Ventilsitz 42 geöffnet wird, ist allerdings der obere Ventilsitz 19 noch nicht verschlossen. Dies definiert eine Zwischenstellung, die jedoch für die Abreinigung unschädlich ist, weil kurz danach der eine Ventilsitz 19 und der andere Ventilsitz 42 geöffnet ist und hierdurch dann der Filter 3 wirksam abgereinigt wird.

Die Figuren 3 und 4 zeigen also bezüglich der Ventile eine vereinfachte Ventilausführung.
In einer weiteren bevorzugten Ausführungsform soll eine Anordnung der Feder 33, im oberen Bereich des Stößels 28 oder innerhalb der Magnetventile 26 und 27 beansprucht werden.

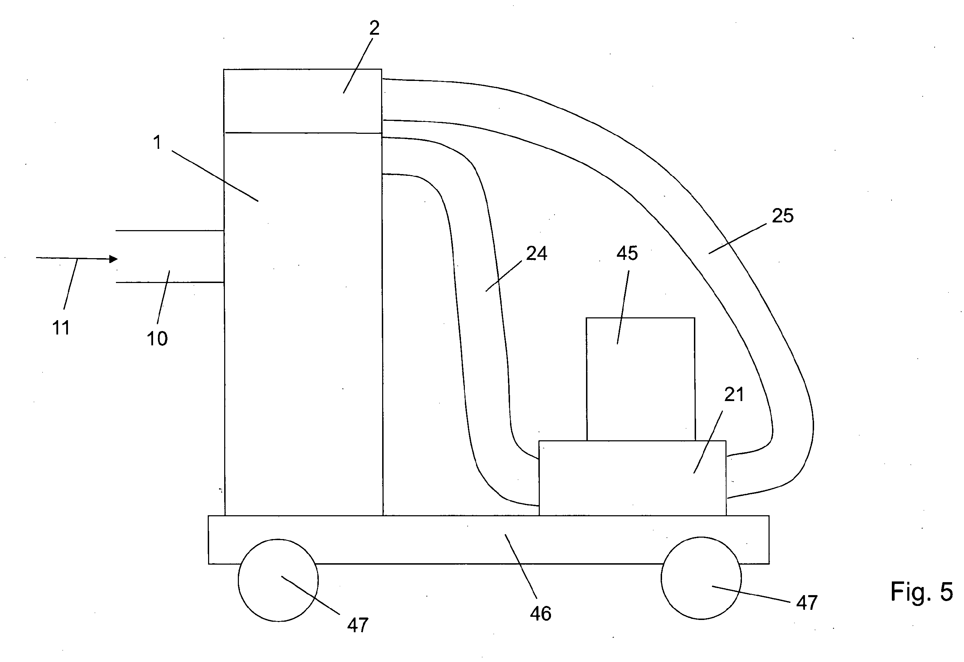

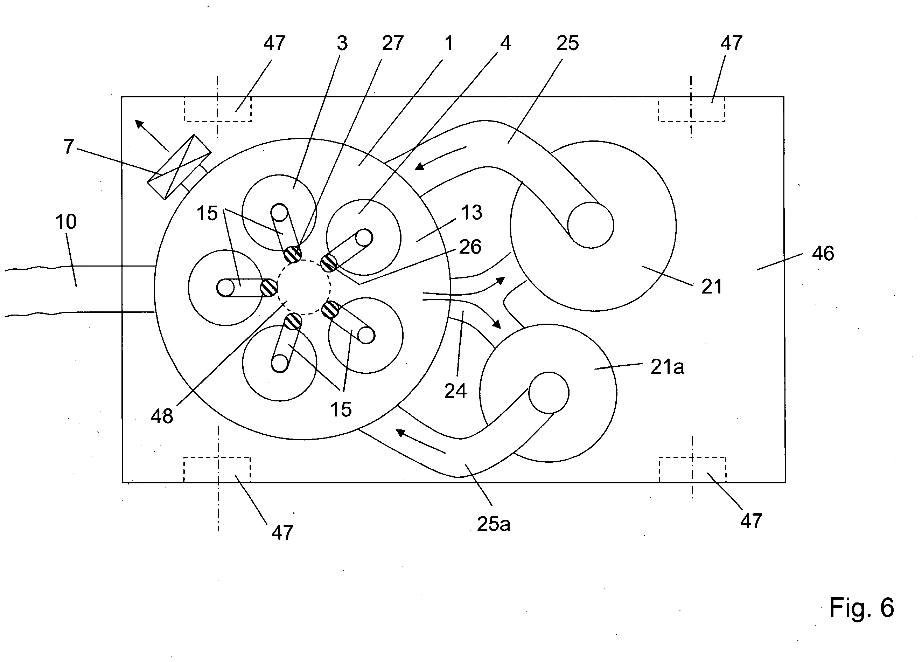

Die Figuren 5 und 6 zeigen als Ausführungsbeispiel, wie ein Schmutzsaugergehäuse 1 auf einem Fahrgestell 46 zusammen mit einem getrennt davon ausgebildeten Gebläse 21 angeordnet sein kann.

Das Fahrgestell 46 weist Räder 47 auf, mit denen es fahrbar ausgebildet ist.

Während die Figur 5 die Verwendung eines einzigen Gebläses 21 zeigt, welches in an sich bekannter Weise von einem Motor 45 angetrieben ist, zeigt die Figur 6, dass es auch möglich ist, mehrere Gebläse 21, 21a parallel zueinander zu betreiben.

Hierbei gibt es ein Gebläse 21a zusätzlich zu einem Gebläse 21, und die beiden Gebläse 21, 21a erzeugen jeweils Überdruckluft, die über die Schläuche 25, 25a dem einzigen Schmutzsaugergehäuse 1 zugeführt wird.

Dort ist erkennbar, dass im Schmutzsaugergehäuse eine Anzahl von fünf Filtern angeordnet sind, wobei lediglich der Filter 3 bezeichnet ist, weil die anderen vier verbleibenden Filter genau identisch ausgebildet sind.

Jedes Filter ist mit einem zugeordneten Hubmagneten 26 oder 27 ansteuerbar, und je nach der Ansteuerstellung werden ein oder mehrere Filter 3 in Arbeitsstellung und ein oder mehrere Filter in der Abreinigungsstellung gehalten.

Die aus dem Schmutzsaugergehäuse 1 abgesaugte Saugluft wird über eine verzweigte Schlauch- oder Rohrleitung der Saugseite der jeweiligen Gebläse 21a, 21 zugeführt.

Es ist aus Figur 6 noch zu entnehmen, dass die einzelnen, ringförmig und gleichmäßig am Umfang verteilt angeordneten Hubmagnete an einer zentralen Befestigung 48 am Schmutzsaugergehäuse 1 befestigt sind.

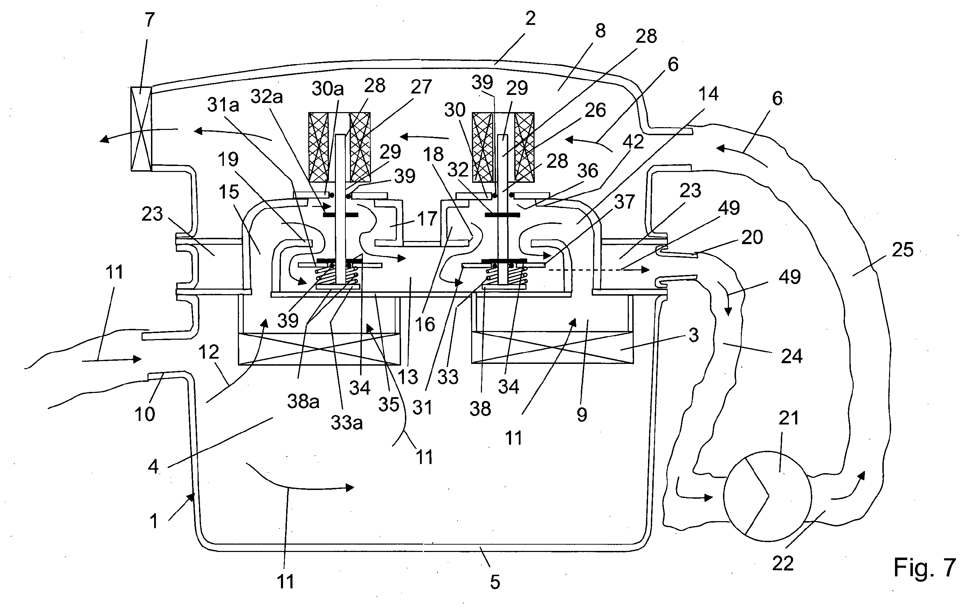

Mit der Figur 7 wird ein Schmutzsaugergehäuse 1 mit mindestens zwei Filtern dargestellt. Als Besonderheit bei dieser Ausführungsform wird als Filter 3, 4 ein Flachfilter eingesetzt, welcher in dem Schmutzsaugergehäuse getrennt angeordnet ist.
Als Flachfilter kann hier beispielsweise ein Papierfilter, ein Kohlefilter, ein Polyester-Vlies oder dergleichen zum Einsatz kommen. Die Erfindung soll jedoch nicht auf diese Filter- Ausführungsformen beschränkt sein.

### Zeichnungslegende

- 1: Schmutzsaugergehäuse
- 2: Gehäusedeckel
- 3: Filter
- 4: Filter
- 5: Behälterboden
- 6: Pfeilrichtung
- 7: Ausblasfilter
- 8: Überdruckraum
- 9: Filterkammer
- 10: Sauganschluss
- 11: Pfeilrichtung
- 12: Pfeilrichtung
- 13: Saugkammer (verbunden mit 23)
- 14: Einlasskanal
- 15: Einlasskanal
- 16: Zwischenkammer
- 17: Zwischenkammer
- 18: Ventilsitz
- 19: Ventilsitz
- 20: Einlassöffnung
- 21: Gebläse
- 22: Auslass
- 23: Ringkammer (Unterdruckraum)
- 24: Schlauch
- 25: Schlauch
- 26: Hubmagnet
- 27: Hubmagnet
- 28: Ventilstange
- 29: Ventilstange
- 30: Ventilteller 30a
- 31: Ventilteller 30a
- 32: Mitnehmerscheibe 32a
- 33: Feder 33a
- 34: Anschlussscheibe
- 35: Boden
- 36: Abstand
- 37: Abstand
- 38: Anschlagscheibe 38a
- 39: Dichtung
- 40: Spülöffnung
- 41: Pfeilrichtung
- 42: Ventilsitz
- 43: Schalldämpfer
- 44: Anschlag
- 45: Motor
- 46: Fahrgestell
- 47: Rad
- 48: Befestigung
- 49: Pfeilrichtung

## Patentansprüche

1. Schmutzsauger mit mindestens zwei in einem Schmutzsaugergehäuse (1) angeordneten Filtern (3, 4) und einer Ventilsteuerung zur Filterabreinigung mindestens eines Filters (3, 4), bei welchem beim Abreinigungsvorgang mindestens ein in der Ansaugöffnung eines abzureinigenden Filters (3, 4) befindliches Ventil verschlossen und mindestens ein zur Abreinigung eines Filters (3, 4) dienendes Ventil geöffnet wird, wobei die Ventilsteuerung für jeden Filter (3, 4) jeweils einen Hubmagneten (26, 27), eine durch den Hubmagneten (26, 27) betätigte Ventilstange (28, 29) und zwei Ventilteller (30, 31) aufweist, **dadurch gekennzeichnet, dass** die Ventilteller (30, 31) mit der jeweiligen Ventilstange (28, 29) des jeweiligen Hubmagneten (26, 27) fest verbunden sind, wobei bei nicht angesteuertem Hubmagnet (26, 27) der eine Ventilteller (30) mittels einer Feder (33) in einer Schließstellung federbelastet gehalten ist und an einem Ventilsitz (42) anliegt, während der andere Ventilteller (31) in einer Offenstellung ist, und die von einem Gebläse (21) erzeugte Saugluft über einen Sauganschluss (10) in den Innenraum des Schmutzsaugergehäuses (1) eingesaugt wird und den zugeordneten Filter (3, 4) von der Außenseite beaufschlagt, und bei angesteuertem Hubmagneten (26, 27) der eine Ventilteller (30) in seiner Offenstellung ist, wobei die Spülluft aus einem Überdruckraum (8) durch einen Einlasskanal (14) in eine Filterkammer (9) des Filters (3, 4) einströmt und der Filter (3, 4) abgereinigt wird, während der andere Ventilteller (31) in Schließstellung ist und an einem Ventilsitz (19) anliegt.

2. Schmutzsauger mit einer Ventilsteuerung nach Anspruch 1, **dadurch gekennzeichnet, dass** mehrere Filterpatronen oder Flachfilter getrennt voneinander durch die Ventilsteuerung ansteuerbar sind.

3. Schmutzsauger mit einer Ventilsteuerung nach einem der Ansprüche 1 oder 2, **dadurch gekennzeichnet, dass** die Feder (33) an einem gehäusefesten Anschlag (44) anliegt und sich dort abstützt.

4. Schmutzsauger mit einer Ventilsteuerung nach einem der Ansprüche 1 bis 3, **dadurch gekennzeichnet**, **dadurch gekennzeichnet, dass** mehr als zwei Hubmagnete (26, 27) ringförmig und gleichmäßig an einer zentralen Befestigung (48) am Schmutzsaugergehäuse (1) befestigt sind, und jedem Hubmagnet (26, 27) ein Filter (3, 4) zugeordnet ist.

## Claims

1. Vacuum cleaner having at least two filters (3, 4) arranged in a vacuum cleaner housing (1) and a valve control for filter cleaning of at least one filter (3, 4), in which during the cleaning process, at least one valve located in the suction opening of a filter (3, 4) to be cleaned is closed and at least one valve serving for cleaning a filter (3, 4) is opened, wherein the valve control for each filter (3, 4) has respectively a lifting magnet (26, 27), a valve rod (28, 29) actuated by the lifting magnet (26, 27) and two valve discs (30, 31), **characterised in that** the valve discs (30, 31) are firmly connected to the respective valve rod (28, 29) of the respective lifting magnet (26, 27), wherein when the lifting magnet (26, 27) is not actuated, the one valve disc (30) is held in spring-loaded manner in a closed position by means of a spring (33) and rests on a valve seat (42), while the other valve disc (31) is in an open position, and the suction air generated by a fan (21) is sucked into the interior of the vacuum cleaner housing (1) via a suction connection (10) and acts upon the assigned filter (3, 4) from the outer side, and when the lifting magnet (26, 27) is actuated, the one valve disc (30) is in its open position, wherein the purging air flows from an excess pressure chamber (8) through an inlet channel (14) into a filter chamber (9) of the filter (3, 4) and the filter (3, 4) is cleaned, while the other valve disc (31) is in the closed position and rests on a valve seat (19).

2. Vacuum cleaner having a valve control according to claim 1, **characterised in that** several filter cartridges or flat filters can be actuated separately from one another by the valve control.

3. Vacuum cleaner having a valve control according to one of claims 1 or 2, **characterised in that** the spring (33) rests on a stop (44) fixed to the housing and is supported there.

4. Vacuum cleaner having a valve control according to one of claims 1 to 3, **characterised in that** more than two lifting magnets (26, 27) are attached annularly and uniformly to a central attachment (48) on the vacuum cleaner housing (1), and a filter (3, 4) is assigned to each lifting magnet (26, 27).

## Revendications

1. Aspirateur avec au moins deux filtres (3, 4) disposés dans un boîtier d'aspirateur (1) et une commande à soupape pour nettoyage de filtre d'au moins un filtre (3, 4), dans lequel lors de l'opération de nettoyage au moins une soupape située dans l'ouverture d'aspiration d'un filtre à nettoyer (3, 4) se ferme et au moins une soupape servant à nettoyer un filtre (3, 4) s'ouvre, dans lequel la soupape de commande comporte pour chaque filtre (3, 4) un aimant de levage respectif (26, 27), une tige de soupape (28, 29) actionnée par l'aimant de levage (26, 27) et deux têtes de soupape (30, 31), **caractérisé en ce que** les têtes de soupape (30, 31) sont reliées de manière fixe à la tige de soupape respective (28, 29) de l'aimant de levage respectif (26, 37), dans lequel quand l'aimant de levage (26, 27) n'est pas commandé, une tête de soupape (30) est maintenue, contrainte par ressort, dans une position fermée à l'aide d'un ressort (33) et est appliquée contre un siège de soupape (42) tandis que l'autre tête de soupape (31) est dans une position ouverte, et l'air d'aspiration produit par une soufflante (21) est aspiré jusqu'à l'intérieur du boîtier d'aspirateur (1) en passant par un raccordement d'aspiration (10) et contraint de l'extérieur le filtre associé (3, 4), et quand l'aimant de levage (26, 27) est commandé, une tête de soupape (30) est dans sa position ouverte, dans lequel l'air de rinçage, d'un espace de surpression (8), est aspiré à travers un conduit d'admission (14) jusque dans une chambre de filtre (9) du filtre (3, 4) et le filtre (3, 4) est nettoyé, tandis que l'autre tête de soupape (31) est en position fermée et est appliquée contre un siège de soupape (19).

2. Aspirateur avec une commande à soupape selon la revendication 1, **caractérisé en ce que** plusieurs cartouches de filtres ou filtres plats sont aptes à être commandés séparément les uns des autres par la commande à soupape.

3. Aspirateur avec une commande à soupape selon l'une des revendications 1 ou 2, **caractérisé en ce que** le ressort (33) est appliqué contre une butée (44) solidaire du boîtier et s'appuie à cet endroit.

4. Aspirateur avec une commande à soupape selon l'une des revendications 1 à 3, **caractérisé en ce que** plus de deux aimants de levage (26, 27) sont fixés suivant une forme annulaire et régulière sur une fixation centrale (48) sur le boîtier d'aspirateur (1), et à chaque aimant de levage (26, 27) est associé un filtre (3, 4).
